# EUROPÄISCHE PATENTSCHRIFT

(11) **EP 2 156 974 B1**
(45) Veröffentlichungstag und Bekanntmachung des Hinweises auf die Patenterteilung: **28.11.2012**
(21) Anmeldenummer: 09010221.1
(22) Anmeldetag: 07.08.2009
(51) Int. Cl.: B60J 7/06, B60J 7/12

(54) **Faltverdeck für einen Personenkraftwagen**
Collapsible roof for a passenger vehicle
Toit escamotable pour un véhicule de transport de passagers

(30) Priorität: 21.08.2008 DE 102008039096
(43) Veröffentlichungstag der Anmeldung: 24.02.2010
(73) Patentinhaber: Magna Car Top Systems GmbH, 74321 Bietigheim-Bissingen (DE)
(72) Erfinder: Käsweber, Hubert, 71636 Ludwigsburg (DE); Reuter, Bärbel, 71638 Ludwigsburg (DE); Bergerhoff, Harald, 71636 Ludwigsburg (DE)
(74) Vertreter: Völger, Silke Beatrix

(56) Entgegenhaltungen:
- DD-A- 51 286
- DE-A1- 10 113 101
- DE-U1- 20 118 834
- US-A- 2 556 565
- US-A- 5 829 820
- US-A1- 2007 182 199

## Beschreibung

Die Erfindung bezieht sich auf ein Faltverdeck für einen Personenkraftwagen, das zwischen einer Schließstellung und einer Offenstellung bewegbar ist, mit den Merkmalen des Oberbegriffs des Anspruchs 1.

Aus der US 2,556,565 ist ein Faltverdeck für einen Personenkraftwagen bekannt, das zwischen einer Schließstellung und einer Offenstellung bewegbar ist. Das Faltverdeck umfasst einen zur Fahrzeugaußenseite hin gerichteten Verdeckbezug und eine in einen Fahrgastraum weisenden Innenverkleidung. Der Verdeckbezug und die Innenverkleidung sind über Haltemittel in Aufnahmen von mehreren in der Schließstellung des Faltverdecks mit Abstand zueinander angeordneten und quer zur Fahrzeuglängsrichtung verlaufenden Spriegeln festgelegt. Dabei besteht der jeweilige Spriegel aus einem aus Blech geformten, im Querschnitt ein Hohlprofil aufweisenden Träger, in den die ersten und zweiten Aufnahmen als Formabschnitte des Spriegels für die Haltemittel des Verdeckbezugs und der Innenverkleidung eingearbeitet sind. Beim bekannten Faltverdeck ist der Träger aus zwei Teilträgern zusammengebaut, wobei der erste Teilträger die ersten Aufnahmen für den Verdeckbezug aufweist, während der zweite Teilträger die zweiten Aufnahmen für die Innenverkleidung aufweist. Ferner ist beim bekannten Faltverdeck der Träger so montiert, dass er sowohl bezüglich des Verdeckbezugs als auch bezüglich der Innenverkleidung an einer dem Fahrgastraum zugewandten Seite angeordnet ist.

Ein weiteres Faltverdeck ist aus der US 5,829,820 bekannt.

Die DE 201 18 834 U1 befasst sich mit einem Falt- bzw. Klappverdeck für Fahrzeuge wie Cabriolets, Roadster oder dgl. mit einem an einem Aufbau des jeweiligen Fahrzeugs angelenkten Verdeckgestänge. Das Verdeckgestänge umfasst wenigstens einen Spriegel, der sich in Fahrzeugquerrichtung erstreckt und zur Halterung eines Außenbezugs, eines Spanngurts und eines Innenbezugs ausgebildet ist. Hierzu ist der Spriegel, der aus einem stranggepressten Leichtmetallprofil besteht, mit als Aufnahmen für Haltemittel des Außenbezugs, des Spanngurts und des Innenbezugs versehen. Die Aufnahme für das Haltemittel des Außenbezugs ist ein Längskanal mit kreisförmigem Querschnitt, in dem eine korrespondierende Verdickung des Haltemittels ruht. Die Haltemittel des Spanngurts und des Innenbezugs weisen Stege auf, die in Nuten des Spriegels eingesetzt und unter Zwischenschaltung von Federklammern in Lage gehalten werden.

Einen Spriegel für ein Faltverdeck eines Kraftfahrzeugs der vorstehenden Gattung gibt auch die US 5,829,820 wieder, welcher Spriegel neben Kanälen für Haltemittel mit einem Hohlraum versehen ist.

Bei einer anderen Technologie, genauer ein Lenkrad für ein Kraftfahrzeug gemäß der DE 198 38 452 C1, wird ein Lenkradkranz behandelt, der als Hohlkörper ausgeführt ist. Der Lenkradkranz wird durch eine Blechplatine geschaffen, die durch Rollbiegen über zwei Achsen zu einem rohrförmigen Gebilde umgeformt wird.

Es ist Aufgabe der Erfindung einen Spriegel für ein Faltverdeck eines Personenkraftwagens bezüglich Gewicht, Festigkeit und Funktion zu optimieren. Dabei sollte aber auch sichergestellt werden, dass der Spriegel sich auf wirtschaftliche Weise produzieren lässt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die in das Faltverdeck des Personenkraftwagens eingebauten Spriegel aus Blech gestaltete Träger in Gestalt von Hohlprofilen bestehen, die bei relativ geringem Gewicht bspw, weil aus Leichtmetall- oder dünnwandigem, auch hochfestem Stahlblech bestehend, sich durch gezielte Festigkeit auszeichnen. Hervorzuheben sind aber auch die günstigen Produktionsmöglichkeiten der Spriegel, namentlich dann, wenn sie durch Rollbiegen gefertigt werden, Musterhaft in jeden Träger integriert sind die Aufnahmen für die Haltemittel des Verdeckbezugs und der Innenverkleidung, welche Aufnahmen aus einem Stück mit dem Träger gefertigt sind. Die Aufnahmen können durch entsprechende Formgebungen zur Fastigkeitsoptimierung des Trägers herangezogen werden. Schließlich lassen sich die Haltemittel auf einfache Art und Weise mit den Aufnahmen verbinden, was zur Fertigungsvereinfachung beiträgt.

In der Zeichnung wird ein Ausführungsbeispiel der Erfindung gezeigt, das nachstehend näher erläutert wird.

Es zeigen
Fig. 1 eine Schrägansicht von rechts oben auf einen Personenkraftwagen mit einem erfindungsgemäßen Faltverdeck, teilweise im Schnitt,
Fig. 2 eine Ansicht in Pfeilrichtung A der Fig. 1 in größerem Maßstab,
Fig. 3 eine Schrägansicht einer Anordnung von mit Abstand zueinander angeordneten Spriegeln des Faltverdecks.

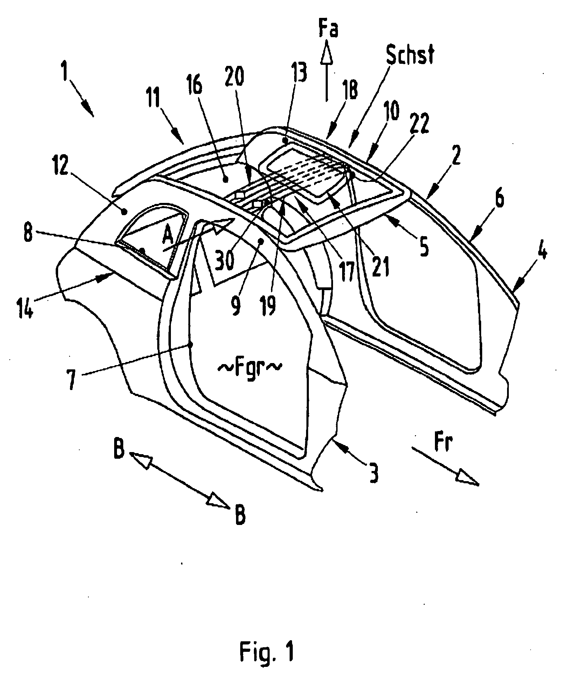

Von einem Personenkraftwagen 1 -Fig. 1- ist lediglich ein Aufbau 2 mit gegenüberliegenden Seitenwänden 3 und 4 und einem oberen Querträger 5 eines Windschutzscheibenrahmens 6 dargestellt. Die je eine Türöffnung 7 und eine Fensteröffnung 8 aufweisenden Seitenwände 3 und 4, die aufrecht stehen und fest mit dem Aufbau 2 verbunden sind, umfassen Dachseitenrahmen 9 und 10 , die in einem rückwärtigen Bereich 11 des Aufbaus 2 in Säulen 12 und 13 übergehen und auf eine etwa horizontal verlaufende Gürtellinie 14 des besagten Aufbaus stoßen. Die Dachseitenrahmen 9 und 10, der vordere Querträger 5 und ein benachbart der Gürtellinie 14 verlaufendes Querleil 15 des Aufbaus 2 begrenzen eine relativ große Dachöffnung 16, in der ein bewegliches Dach 17 in Fahrzeuglängsrichtung B-B verschiebbar angeordnet ist; die Fahrtrichtung ist mit Fr bezeichnet.

Das Dach 17 ist nach Art eines Faltverdecks 18 aufgebaut, wie bspw. in der US 3,658,378 und DE 807 474 beschrieben und zwischen einer Schließstellung Schst und Offenstellung -nicht gezeigt- und vice versa bewegbar. In der Offenstellung des Faltverdecks 18 ist letzteres in Falten gelegt, weshalb besagtes Faltverdeck 18 eine Anzahl quer zur Fahrzeuglängsrichtung B-B verlaufender, mit Abstand zueinander angeordneter Spriegel z.B. 19 und 20 aufweist. Die Spriegel 19 und 20 sind zumindest teilweise in Längsführungen der Dachseitenrahmen 9 und 10 angeordnet und arbeiten mit einem zur Fahrzeugaußenseite Fa hin weisenden Verdeckbezug 21 sowie einer zum Fahrgastraum Fgr zeigende Innenverkleidung 22 -auch Innenhimmel bezeichnet- zusammen. Zwischen Verdeckbezug 21 und Innenverkleidung 22, beide bestehen aus flexiblem Material, erstrecken sich die Spriegel 19 und 20. Und an den Spriegeln 19 und 20 sind der Verdeckbezug 21 und die Innenverkleidung 22 unter Zwischenschaltung von Haltemitteln 23 und 24 gehalten. Die Haltemittel 23 und 24 sind mittels flanschartiger Abschnitte 25 und 26 mit dem Verdeckbezug 21 bzw. der Innenverkleidung 22 durch Nähen, Kleben oder dgl. verbunden. Diese Haltemittel 23 und 24 sind in ersten Aufnahmen 27 und zweiten Aufnahmen 28 der Spriegel 19 und 20 gehalten.

Jeder Spriege,l z.B. 19, wird durch einen aus Blech geformten, im Querschnitt ein Hohlprofil 29 aufweisenden Träger 30 gebildet, In diesen Träger 30 sind die als erste und zweite Formabschnitte 31 und 32 ausgebildeten Aufnahmen 27 und 28 zur Festlegung der Haltemittel 23 und 24 des Verdeckbezugs 21 und der Innenverkleidung 22 eingearbeitet. Das Blech des Trägers 30 kann aus Feinblech (Dicke > 3 mm) bestehen, wobei sich als Werkstoff Stahl -auch hochfester Gattung-, Leichtmetall oder dgl. eignet. Im Ausführungsbeispiel sind beide Aufnahmen 27 und 28 aus einem Stück mit dem Träger 30 hergestellt. Dabei sind die Aufnahmen 27 und 28 und freie Endbereiche 33 und 34 der Haltemittel 23 und 24 so gestaltet, dass der Verdeckbezug 21 und die Innenverkleidung 22 in den zuletzt genannten Aufnahmen formschlüssig in Lage gehalten werden. Die Träger 30 mit den Aufnahmen 27 und 28 bzw. Formabschnitten 31 und 32 wird im Ausführungsbeispiel durch Rollbiegen auf Blechprofiliermaschinen -DD 51 286- hergestellt, das eine Sonderform des Schwenkbiegens ist.

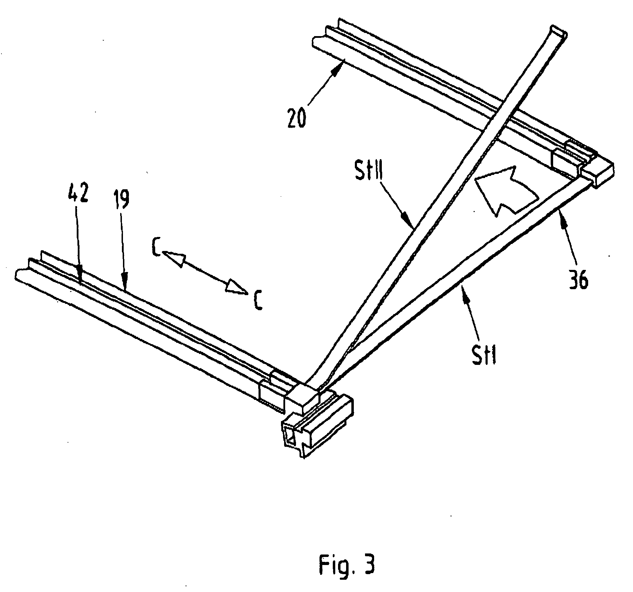

Der Querschnitt des Trägers 30 ist quadratisch mit gegenüberliegenden horizontalen Wänden 35 und 36 sowie aufrechten Wänden 37 und 38. In der horizontalen Wand 35, die sich benachbart des Verdeckbezugs 21 erstreckt, ist die erste Aufnahme 27 vorgesehen; in der horizontalen Wand 36 die zweite Aufnahme 28. An den Endbereichen 33 und 34 der Haltemittel 23 und 24 sind Erweiterungen 39 und 40 angebracht, die sich in den ersten und zweiten Aufnahmen 27 und 28 abstützen, Die erste Aufnahme 27 weist einen ringförmigen Querschnitt 41 mit einer eine Durchgangsöffnung 42 umfassenden Verengung 43 auf. In dem Querschnitt 41 ist die Erweiterung 39 angeordnet, die eine im Querschnitt kreisförmige Verdickung 44 besitzt, und durch die Durchgangsöffnung 42 ist ein Haltemittelabschnitt 45 des Haltemittels 23 hindurchgeführt. Haltemittel 23 und Verdeckbezug 21 können so ausgelegt sein, dass sie in der schließstellung Schst des Faltverdecks 18 auf der horizontalen Wand 35 aufliegen. Die Erweiterung 39 bzw. kreisförmige Verdickung 44 wird durch Bewegen des Haltemittels 23 des Verdeckbezugs 21 in Längsrichtung C-C -Fig. 3. des Trägers 19 in die erste Aufnahme 27 eingeführt und in ihre konstruktiv festgelegte Endlage bewegt.

Die zweite Aufnahme 28 besitzt eine schlitzartige Durchgangsöffnung 46 in der horizontalen, der Innenverkleidung 22 zugekehrten Wand 36 des Trägers 30, wodurch sich von den aufrechten Wänden 37 und 38 weggeführte einander zugekehrte Schenkel 47 und 48 ergeben. Diese Schenkel 45 und 46 sind zu einem Innenraum 49 des Trägers 30 hin abgewinkelt, und zwar unter Einschluss eines spitzen Winkels α zu einer Horizontalen 50 der Wand 36. An den Schenkeln 47 und 48 stützt sich die zweite Erweiterung 40 des zweiten Haltemittels 24 ab, die in etwa mit einem pilzförmigen Querschnitt 51 versehen ist. Letzterer verfügt über Stützwangen 52 und 53, die eine Innenseite 54 der Schenkel 47 und 48 hintergreifen. Während die Erweiterung 38 sich an den Schenkeln 45 und 46 abstützt, durchdringt ein Haltemittelabschnitt 55 des zweiten Haltemittels 24 die Durchgangsöffnung 46 zwischen besagten Schenkeln, Die zweite Erweiterung 38 bzw. der pilzförmige Querschnitt 46 ist durch Bewegen des zweiten Haltemittels 24 in Längsrichtung C-C des Trägers 19 bzw. durch Einklipsen über die schlitzartige Durchgangsöffnung 44 in die zweite Aufnahme 28 einbringbar.

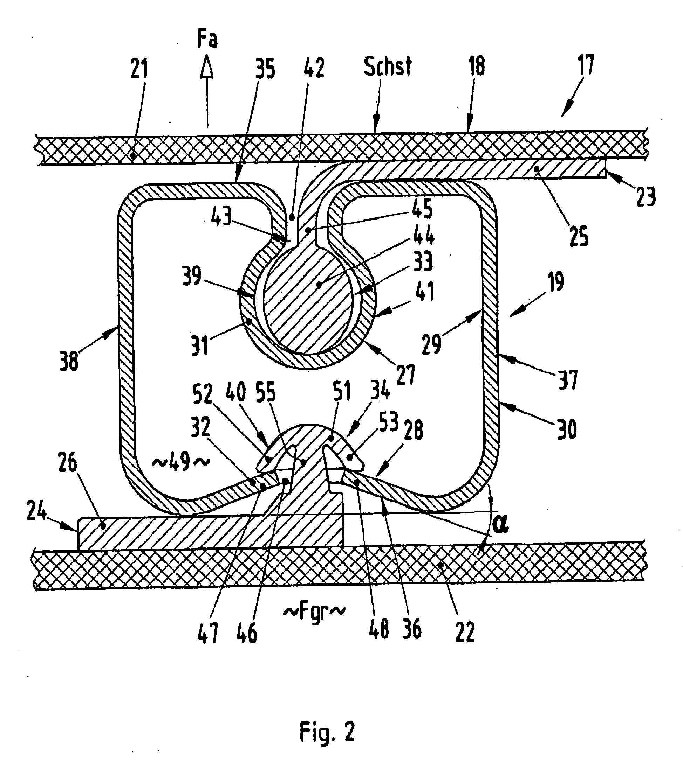

In Fig. 2 ist dargestellt, dass der Spriegel 19 des Faltverdecks 18 in seitlichen Dachrahmen 9 und 10 -Fig. 1- geführt ist. Dagegen wird der Spriegel 20 über ein Federelement 56, Gattung Blattfeder, zur Faltenbildung aus einer abgesenkten Stellung Stl in eine aufgestellte Stellung Stll verbracht.

## Patentansprüche

1. Faltverdeck für einen Personenkraftwagen, das zwischen einer Schließstellung (Schst) und einer Offenstellung bewegbar ist, welches Faltverdeck (18) einen zur Fahrzeugaußenseite hin gerichteten Verdeckbezug (21) und eine in einen Fahrgastraum (Fgr) weisende Innenverkleidung (22) umfasst, wobei der Verdeckbezug (21) und die Innenverkleidung (22) über Haltemittel (23, 24) in Aufnahmen (27, 28) von einem oder mehreren in der Schließstellung (Schst) des Faltverdecks (18) mit Abstand zueinander angeordneten und quer zur Fahrzeuglängsrichtung (B-B) verlaufenden Spriegeln (19, 20) festgelegt sind, wobei jeder Spriegel (19. 20) aus einem aus Blech geformten, im Querschnitt ein Hohlprofil (29) aufweisenden Träger (30) besteht, in den die ersten und zweiten Aufnahmen (27, 28) als Formabschnitte (31, 32) des Spriegels (19, 20) für die Haltemittel (23, 24) des Verdeckbezugs (21) und der Innenverkleidung (22) eingearbeitet sind, **dadurch gekennzeichnet,**
- **dass** der Träger (30) mit der ersten und der zweiten Aufnahme (27, 28) aus einem Stück hergestellt ist,
- **dass** der Spriegel (19) bzw. der Träger (30) zwischen Verdeckbezug (21) und Innenverkleidung (22) angeordnet ist,
- **dass** der Träger (30) mit den Aufnahmen (28, 29) bzw. Formabschnitten (31, 32) durch Rollbiegen hergestellt ist.

2. Faltverdeck nach Anspruch 1, **dadurch gekennzeichnet, dass** die Haltemittel (23, 24) des Verdeckbezugs (21) und der Innenverkleidung (22) formschlüssig in der ersten Aufnahme (27) und der zweiten Aufnahme (28) in Lage gehalten werden.

3. Faltverdeck nach Anspruch 2, **dadurch gekennzeichnet, dass** die ersten Haltemittel (23) und die zweiten Haltemittel (24) an Endbereichen (33, 34) Erweiterungen (39, 40) aufweisen, die sich in den ersten und zweiten Aufnahmen (27 und 28) abstützen.

4. Faltverdeck nach einem oder mehreren der vorangehenden Ansprüche, **dadurch gekennzeichnet, dass** die erste Aufnahme (27) einen ringförmigen Querschnitt (41) in einer Wand (35) des Trägers (30) mit einer durch eine Verengung (43) des ringförmigen Querschnitts (41) gebildeten Durchgangsöffnung (42) aufweist, durch die ein Haltemittelabschnitt (45) des Haltemittels (23) hindurchgeführt ist.

5. Faltverdeck nach den Ansprüchen 3 und 4, **dadurch gekennzeichnet, dass** die Erweiterung (39) in Gestalt einer kreisförmigen Verdickung des ersten Haltemittels (23) durch Bewegen in Längsrichtung (C-C) des Trägers (30) in die erste Aufnahme (27) eingeführt wird.

6. Faltverdeck nach einem oder mehren der vorangehenden Ansprüche, **dadurch gekennzeichnet, dass** die zweite Aufnahme (28) eine schlitzartige Öffnung (46) in einer Wand (36) des Trägers (30) umfasst, welche Aufnahme (28) einander zugekehrte Schenkel (47 und 48) besitzt.

7. Faltverdeck nach Anspruch 6, **dadurch gekennzeichnet, dass** die einander zugekehrten Schenkel (47, 48) der Wand (36) zu einem Innenraum (49) des Träges (30) hin abgewinkelt sind.

8. Faltverdeck nach einem oder mehreren der vorangehenden Ansprüche sofern von Anspruch 3 dohängig, **dadurch gekennzeichnet, dass** die Erweiterung (40) für das Haltemittel (24) einen etwa pilzförmigen Querschnitt (51) besitzt und mit Stützwangen (52, 53) eine Innenseite (54) der Schenkel (47, 48) hintergreift.

9. Faltverdeck nach Anspruch 8, **dadurch gekennzeichnet, dass** die Erweiterung (40) des zweiten Haltemittels (24) durch Klipsen in die zweite Aufnahme (28) eingebracht wird.

10. Faltverdeck nach Anspruch 8, **dadurch gekennzeichnet, dass** die Erweiterung (40) des zweiten Haltemittels (24) durch Bewegen in Längsrichtung (C-C) des Trägers (30) in die zweite Aufnahme (28) eingebracht wird.

11. Faltverdeck nach einem oder mehreren der vorangehenden Ansprüche, **dadurch gekennzeichnet, dass** der Querschnitt des Trägers (30) quadratisch, rechteckig, kreisförmig, elliptisch oder dgl. ausgeführt ist.

12. Faltverdeck nach einem oder mehreren der vorangehenden Ansprüche, **dadurch gekennzeichnet, dass** der Träger (30) aus Stahl, Leichtmetall oder dgl. hergestellt ist.

## Claims

1. Collapsible roof for a passenger vehicle, which is movable between a closed position (Schst) and an open position, which collapsible roof (18) has a roof cover (21) directed towards the outside of the vehicle and an interior lining (22) facing into a passenger compartment (Fgr), wherein the roof cover (21) and the interior lining (22) are fixed via retaining means (23, 24) in receptacles (27, 28) of one or more bows (19, 20) arranged at a distance from one another in the closed position (Schst) of the collapsible roof (18) and running transversely with respect to the longitudinal direction (B-B) of the vehicle, wherein each bow (19, 20) consists of a support (30) which is moulded from sheet metal, has a hollow profile (29) in cross section and into which the first and second receptacles (27, 28) are incorporated as shaped sections (31, 32) of the bow (19, 20) for the retaining means (23, 24) of the roof cover (21) and the interior lining (22), **characterized**
- **in that** the support (30) is produced together with the first and the second receptacle (27, 28) from one piece,
- **in that** the bow (19) or the support (30) is arranged between the roof cover (21) and interior lining (22),
- **in that** the support (30) is produced together with the receptacles (28, 29) or shaped sections (31, 32) by edge rolling.

2. Collapsible roof according to Claim 1, **characterized in that** the retaining means (23, 24) of the roof cover (21) and the interior lining (22) are kept in position in a form-fitting manner in the first receptacle (27) and the second receptacle (28).

3. Collapsible roof according to Claim 2, **characterized in that** end regions (33, 34) of the first retaining means (23) and the second retaining means (24) have widened portions (39, 40) which are supported in the first and second receptacles (27 and 28).

4. Collapsible roof according to one or more of the preceding claims, **characterized in that** the first receptacle (27) has an annular cross section (41) in a wall (35) of the support (30) with a passage opening (42) which is formed by a narrowed portion (43) of the annular cross section (41) and through which a section (45) of the retaining means (23) is passed.

5. Collapsible roof according to Claims 3 and 4, **characterized in that** the widened portion (39) in the form of a circular thickening of the first retaining means (23) is introduced into the first receptacle (27) by moving in the longitudinal direction (C-C) of the support (30).

6. Collapsible roof according to one or more of the preceding claims, **characterized in that** the second receptacle (28) comprises a slot-like opening (46) in a wall (36) of the support (30), which receptacle (28) has mutually facing openings (47 and 48).

7. Collapsible roof according to Claim 6, **characterized in that** the mutually facing openings (47, 48) of the wall (36) are angled towards an interior space (49) of the support (30).

8. Collapsible roof according to one or more of the preceding claims, if dependent on Claim 3, **characterized in that** the widened portion (40) for the retaining means (24) has an approximately mushroom-shaped cross section (51) and engages with supporting cheeks (52, 53) behind an inner side (54) of the rims (47, 48).

9. Collapsible roof according to Claim 8, **characterized in that** the widened portion (40) of the second retaining means (24) is placed into the second receptacle (28) by clipping.

10. Collapsible roof according to Claim 8, **characterized in that** the widened portion (40) of the second retaining means (24) is placed into the second receptacle (28) by moving in the longitudinal direction (C-C) of the support (30).

11. Collapsible roof according to one or more of the preceding claims, **characterized in that** the cross section of the support (30) is designed to be square, rectangular, circular, elliptical or the like.

12. Collapsible roof according to one or more of the preceding claims, **characterized in that** the support (30) is produced from steel, light metal or the like.

## Revendications

1. Capote pliante pour un véhicule automobile léger, qui peut être déplacée entre une position de fermeture (Schst) et une position d'ouverture, laquelle capote pliante (18) comprend un revêtement de capote (21) orienté vers le côté extérieur du véhicule et un habillage intérieur (22) tourné vers l'habitacle du véhicule (Fgr), le revêtement de capote (21) et l'habillage intérieur (22) étant fixés par le biais de moyens de retenue (23, 24) dans des logements (27, 28) par un ou plusieurs arceaux (19, 20) disposés dans la position de fermeture (Schst) de la capote pliante (18) à distance les uns des autres et s'étendant transversalement à la direction longitudinale du véhicule (B-B), chaque arceau (19, 20) se composant d'un support (30) façonné en tôle, présentant en section transversale un profilé creux (29), dans lequel support sont incorporés les premier et deuxième logements (27, 28) en tant que portions façonnées (31, 32) de l'arceau (19, 20) pour les moyens de retenue (23, 24) du revêtement de capote (21) et de l'habillage interne (22), **caractérisée en ce que**
- le support (30) est fabriqué d'une seule pièce avec le premier et le deuxième logement (27, 28),
- l'arceau (19) ou le support (30) est disposé entre le revêtement de capote (21) et l'habillage intérieur (22),
- le support (30) avec les logements (28, 29) ou les portions façonnées (31, 32) est fabriqué par roulage.

2. Capote pliante selon la revendication 1, **caractérisée en ce que** les moyens de retenue (23, 24) du revêtement de capote (21) et l'habillage intérieur (22) sont maintenus en position par engagement par correspondance géométrique dans le premier logement (27) et le deuxième logement (28).

3. Capote pliante selon la revendication 2, **caractérisée en ce que** les premiers moyens de retenue (23) et les deuxièmes moyens de retenue (24) présentent, en des régions d'extrémité (33, 34), des élargissements (39, 40) qui s'appuient dans les premier et deuxième logements (27 et 28).

4. Capote pliante selon l'une quelconque ou plusieurs des revendications précédentes, **caractérisée en ce que** le premier logement (27) présente une section transversale annulaire (41) dans une paroi (35) du support (30) avec une ouverture de passage (42) formée par un rétrécissement (33) de la section transversale annulaire (41), à travers laquelle ouverture de passage est guidée une portion de moyen de retenue (45) du moyen de retenue (23).

5. Capote pliante selon les revendications 3 et 4, **caractérisée en ce que** l'élargissement (39) est introduit dans le premier logement (27) sous la forme d'un épaississement circulaire du premier moyen de retenue (23) par déplacement dans la direction longitudinale (C-C) du support (30).

6. Capote pliante selon l'une quelconque ou plusieurs des revendications précédentes, **caractérisée en ce que** le deuxième logement (28) comprend une ouverture en forme de fente (46) dans une paroi (36) du support (30), lequel logement (28) présente des branches (47 et 48) tournées l'une vers l'autre.

7. Capote pliante selon la revendication 6, **caractérisée en ce que** les branches (47, 48) tournées l'une vers l'autre de la paroi (36) sont coudées vers un espace intérieur (49) du support (30).

8. Capote pliante selon l'une quelconque ou plusieurs des revendications précédentes dans la mesure où elles dépendent de la revendication 3, **caractérisée en ce que** l'élargissement (40) pour le moyen de retenue (24) possède une section transversale (51) approximativement en forme de champignon et vient en prise par l'arrière, par des joues de support (52, 53), avec un côté intérieur (54) des branches (47, 48).

9. Capote pliante selon la revendication 8, **caractérisée en ce que** l'élargissement (40) du deuxième moyen de retenue (24) est introduit par enclipsage dans le deuxième logement (28).

10. Capote pliante selon la revendication 8, **caractérisée en ce que** l'élargissement (40) du deuxième moyen de retenue (24) est introduit dans le deuxième logement (28) par déplacement dans la direction longitudinale (C-C) du support (30).

11. Capote pliante selon l'une quelconque ou plusieurs des revendications précédentes, **caractérisée en ce que** la section transversale du support (30) est réalisée sous forme carrée, rectangulaire, circulaire, elliptique ou similaire.

12. Capote pliante selon l'une quelconque ou plusieurs des revendications précédentes, **caractérisée en ce que** le support (30) se compose d'acier, de métal léger ou similaire.
